# FASCICULE DE BREVET EUROPEEN

(11) **EP 0 907 584 B1**
(45) Date de publication et mention de la délivrance du brevet: **12.04.2000**
(21) Numéro de dépôt: 97929341.2
(22) Date de dépôt: 13.06.1997
(51) Int. Cl.: B65D 83/14

(54) **BAGUE DE FIXATION METALLIQUE VISSABLE POUR FIXER UN ORGANE DE DISTRIBUTION SUR UN RECIPIENT**
AUFSCHRAUBBARER BEFESTIGUNGSRING AUS METALL ZUR BEFESTIGUNG EINER ABGABEVORRICHTUNG AN EINEM BEHÄLTER
METAL FIXING RING CAPABLE OF BEING SCREWED FOR FIXING A DISPENSING DEVICE ON A CONTAINER

(30) Priorité: 19.06.1996 FR 9607599
(43) Date de publication de la demande: 14.04.1999
(73) Titulaire: VALOIS S.A., 27110 Le Neubourg (FR)
(72) Inventeur: DE POUS, Olivier, F-75015 Paris (FR); BERGAULT, Jacques, F-76410 Tourville-la-Rivière (FR); JUMEL, Stéphane, F-60190 Remy (FR)
(74) Mandataire: CAPRI SARL
(86) Numéro de dépôt international: FR9701063
(87) Numéro de publication internationale: WO9748622

(56) Documents cités:
- EP-A- 0 096 582
- EP-A- 0 359 605
- CH-A- 665 608
- US-A- 3 002 770
- US-A- 3 568 746
- US-A- 4 361 457

## Description

L'invention concerne des dispositifs de fixation d'organe de distribution sur des récipients et plus particulièrement des bagues vissables, ainsi que des dispositifs de distribution de produit comportant un tel dispositif de fixation.

Pour fixer des organes de distribution, tel que par exemple des pompes ou des valves, sur des récipients contenant du produit à distribuer, plusieurs techniques différentes sont disponibles. Ainsi, on peut utiliser une capsule de sertissage destinée à être sertie sur le col du récipient. De manière alternative, on peut également fixer un organe de distribution au moyen d'une bague de fixation, par exemple une bague comportant des pattes lui permettant de s'encliqueter sur le col du récipient. Un telle bague encliquetable est notamment divulguée dans le document EP-A- 0 359 605. Selon encore une autre technique connue, l'organe de distribution est fixé sur le col d'un récipient au moyen d'une bague vissable, le col du récipient comportant un filetage extérieur qui coopère avec le filetage intérieur de la bague vissable. L'invention se rapporte plus particulièrement à cette dernière technique.

Dans le domaine de la parfumerie, mais également dans d'autres domaines, les récipients, qui peuvent être réalisés en toutes matières appropriées, sont toutefois généralement réalisés en verre ou parfois en métal. L'utilisation de bagues vissables pour fixer des organes de distribution, pompe ou valve, présente un certain nombre de problèmes, dans le cas de bagues métalliques, et notamment en aluminium anodisé.

D'une part, du fait qu'il s'agit d'un frottement de couche dure sur une matière dure, il se crée des problèmes d'irrégularité de frottement ou de grippage.

De plus, les contraintes ne sont pas très bien réparties sur les filets du col du récipient, de sorte que ces filets risquent de se casser lors du montage.

En outre, il existe un risque de dévissage de la bague lors de vibrations, par exemple pendant le transport.

D'autre part, les tolérances de dimension du col du récipient, du filetage sur le col du récipient ou de la bague en métal sont très difficilement compensables. Or, les distributeurs de produit de ce type étant réalisés en très grand nombre, lesdits problèmes de compensation de tolérance qui peuvent apparaître lors du montage de la bague sur le col du récipient, empêchent un montage efficace et économique tant du point de vue du temps que de celui du coût.

La présente invention a donc pour but de fournir un dispositif de montage d'organe de distribution sur des récipients, tel qu'une bague vissable, ne présentant pas les inconvénients précités.

La présente invention a donc notamment pour but de fournir une bague de fixation métallique vissable qui élimine sensiblement les problèmes de frottement lors du vissage de la bague sur le col du récipient.

La présente invention a aussi pour but de fournir une bague de fixation métallique vissable qui élimine sensiblement le risque de cassure des filets du col de récipient lors du vissage de la bague.

La présente invention a encore pour but de fournir une bague de fixation métallique vissable qui ne risque pas de se dévisser accidentellement en raison de vibrations et/ou pour laquelle le vissage/dévissage manuel est facilité.

La présente invention a encore pour but de fournir une bague de fixation métallique vissable qui permette de compenser les tolérances de fabrication des cols de verre.

La présente invention a également pour but de fournir une bague de fixation métallique vissable qui soit simple et peu chère à fabriquer et qui permette de limiter les coûts de montage.

L'invention a donc pour objet dispositif de fixation pour fixer un organe de distribution, tel qu'une pompe ou une valve, sur un col de récipient en verre ou en métal, ledit récipient contenant du produit à distribuer, caractérisé en ce que le dispositif comporte une bague de fixation métallique coopérant d'une part avec l'organe de distribution et d'autre part avec le col du récipient, ladite bague comportant un filetage intérieur se vissant sur un filetage extérieur dudit col du récipient, ladite bague étant pourvue, sur la paroi annulaire intérieure qui comporte ledit filetage, d'un revêtement en matériau plastique.

De préférence, ledit revêtement en matériau plastique recouvre la totalité de la paroi annulaire intérieure de ladite bague.

Avantageusement, ledit revêtement en matériau plastique a une épaisseur uniforme.

Selon un mode de réalisation avantageux, ledit revêtement en matériau plastique a une épaisseur inférieure à environ 0,2 mm.

De préférence, ledit revêtement en matériau plastique est un film de polyoléfine.

En particulier, ledit film de polyoléfine est un film de polypropylène ou un film de polyéthylène connus pour leur résistance aux solvants.

Le récipient, et en particulier son col, peut être en verre ou en métal.

L'invention a aussi pour objet un dispositif de distribution de produit comportant un récipient, un organe de distribution, tel qu'une pompe ou une valve, et un dispositif de fixation tel que défini ci-dessus.

Ainsi, en plastifiant le filetage de la bague, celui-ci ne présente plus une couche dure en surface, et lors de son montage sur le col du récipient, généralement en verre ou en métal, il ne se crée plus de problème de grippage. De même, les contraintes sur les filets des récipients sont mieux réparties et ceux-ci ne risquent plus de se casser. D'autre part, grâce à l'épaisseur de ladite couche en matériau plastique, des problèmes de tolérance dans la fabrication du col, notamment de son filetage, peuvent être compensés par ladite couche en matériau plastique de la bague.

Le principal avantage de la présente invention réside dans le fait que l'absence de problème de grippage, de problème de tolérance et de risque de cassure des filets du récipient, permet un montage sûr et efficace des distributeurs en question, et évite les montages défectueux qui se produisent en raison desdits problèmes précités. Il s'ensuit une baisse des coûts de production et de montage dudit distributeur. Un autre avantage est que le revêtement plastique assure une meilleure fixation de la bague sur le col du récipient, et la bague ne risque plus de se dévisser à cause de vibrations, par exemple lors du transport. De plus, le vissage/dévissage manuel est facilité et rendu plus agréable par la présence du revêtement plastique.

L'invention permet donc aussi de réaliser une bague de fixation vissable qui assure à elle seule une fixation parfaite de l'organe de ditribution. En particulier, la bague de l'invention permet une fabrication et un montage plus économique car il n'est plus nécessaire, comme cela est le cas par exemple avec les bagues encliquetables, de prévoir un élément supplémentaire (frette, bague externe, ...) pour éviter le désencliquetage.

Le revêtement en matériau plastique peut bien entendu être appliqué d'une quelconque manière connue, et le matériau plastique utilisé peut être de tout type approprié. Des matériaux avantageux sont les polyoléfines, tel que le polypropylène ou le polyéthylène, qui sont de préférence appliqués sous la forme de film mince sur le métal, qui peut être de l'aluminium ou du fer blanc. La mise en forme de la pièce peut être effectuée soit antérieurement soit postérieurement au dépôt du film plastique sur le métal. Avantageusement, l'épaisseur du revêtement est uniforme et inférieure à 0,1 mm, de sorte que les avantages susmentionnés sont obtenus de manière optimale.

## Revendications

1. Dispositif de fixation pour fixer un organe de distribution, tel qu'une pompe ou une valve, sur un col de récipient en verre ou en métal, ledit récipient contenant du produit à distribuer, caractérisé en ce que le dispositif comporte une bague de fixation métallique coopérant d'une part avec l'organe de distribution et d'autre part avec le col du récipient, ladite bague comportant un filetage intérieur se vissant sur un filetage extérieur dudit col du récipient, ladite bague étant pourvue, sur la paroi annulaire intérieure qui comporte ledit filetage, d'un revêtement en matériau plastique.

2. Dispositif de fixation selon la revendication 1, dans lequel ledit revêtement en matériau plastique recouvre la totalité de la paroi annulaire intérieure de ladite bague.

3. Dispositif de fixation selon la revendication 1 ou 2, dans lequel ledit revêtement en matériau plastique a une épaisseur uniforme.

4. Dispositif de fixation selon l'une quelconque des revendications précédentes, dans lequel ledit revêtement en matériau plastique a une épaisseur inférieure à environ 0,2 mm.

5. Dispositif de fixation selon l'une quelconque des revendications précédentes, dans lequel ledit revêtement en matériau plastique est un film de polyoléfine.

6. Dispositif de fixation selon la revendication 5, dans lequel ledit film de polyoléfine est un film de polypropylène ou un film de polyéthylène.

7. Dispositif de fixation selon l'une quelconque des revendications précédentes, dans lequel ledit col du récipient est en verre.

8. Dispositif de fixation selon l'une quelconque des revendications 1 à 6, dans lequel ledit col du récipient est en métal.

9. Dispositif de distribution de produit comportant un récipient, un organe de distribution, tel qu'une pompe ou une valve, et un dispositif de fixation selon l'une quelconque des revendications 1 à 8.

## Patentansprüche

1. Befestigungsvorrichtung zum Befestigen eines Abgabeorgans wie zum Beispiel einer Pumpe oder eines Ventils am Hals eines Behälters aus Glas oder Metall, wobei der Behälter das abzugebende Produkt enthält, dadurch **gekennzeichnet,** daß die Vorrichtung einen metallischen Befestigungsring umfaßt, der einerseits mit dem Abgabeorgan und andererseits mit dem Hals des Behälters zusammenwirkt, wobei der Ring ein Innengewinde umfaßt, das auf ein Außengewinde des Halses des Behälters aufschraubbar ist, und der Ring auf der ringförmigen Innenwand, die dieses Gewinde aufweist, mit einem Belag aus Kunststoff versehen ist.

2. Befestigungsvorrichtung nach Anspruch 1, bei der der Belag aus Kunststoff die Gesamtheit der ringförmigen Innenwand des Ringes bedeckt.

3. Befestigungsvorrichtung nach Anspruch 1 oder 2, bei der der Belag aus Kunststoff eine gleichförmige Dicke besitzt.

4. Befestigungsvorrichtung nach einem der vorhergehenden Ansprüche, bei der der Belag aus Kunststoff eine Dicke von weniger als ungefähr 0,2 mm besitzt.

5. Befestigungsvorrichtung nach einem der vorhergehenden Ansprüche, bei der der Belag aus Kunststoff ein Film aus Polyolefin ist.

6. Befestigungsvorrichtung nach Anspruch 5, bei der der Film aus Polyolefin ein Film aus Polypropylen oder ein Film aus Polyethylen ist.

7. Befestigungsvorrichtung nach einem der vorhergehenden Ansprüche, bei der der Hals des Behälters aus Glas besteht.

8. Befestigungsvorrichtung nach einem der Ansprüche 1 bis 6, bei der der Hals des Behälters aus Metall besteht.

9. Abgabevorrichtung für ein Produkt, die einen Behälter, ein Abgabeorgan, wie zum Beispiel eine Pumpe oder ein Ventil und eine Befestigungsvorrichtung nach einem der Ansprüche 1 bis 8 umfaßt.

## Claims

1. Fastening device for fixing a distribution component, such as a pump or a valve, on a container's neck made in glass or in metal, said container containing product which is to be dispensed, characterized in that said device comprises a metal fastening ring cooperating with the distribution component and with the container's neck, said ring ahving internal threads which screw on external threads provided on said neck of the container, said ring having a plastic material coating on the interior annular wall which has said threads.

2. Fastening device according to claim 1, in which said plastic material coating covers the entire interior annular wall of said ring.

3. Fastening device according to claim 1 or 2, in which said plastic material coating has a uniform thickness.

4. Fastening device according to any one of the preceding claims, in which said plastic coating has a thickness of less than approximately 0.2 mm.

5. Fastening device according to any one of the preceding claims, in which said plastic coating is a polyolefin film.

6. Fastening device according to claim 5, in which said polyolefin film is a polypropylene film or a polyethylene film.

7. Fastening device according to any one of the preceding claims, in which said neck of the container is glass.

8. Fastening device according to any one of claims 1 to 6, in which said neck of the container is metal.

9. Product dispenser comprising a container, a distribution component, such as a pump or a valve, and a fastening device according to any one of the claims 1 to 8.
